(19) Europäisches Patentamt
European Patent Office
Office européen des brevets

(11) EP 4 418 873 B1

(12) EUROPEAN PATENT SPECIFICATION

(45) Date of publication and mention of the grant of the patent:
**09.09.2026 Bulletin 2026/37**

(21) Application number: **22801181.3**

(22) Date of filing: **19.10.2022**

(51) International Patent Classification (IPC):
***A23L 7/122*** *(2016.01)* ***A23L 7/126*** *(2016.01)*
***A23L 19/00*** *(2016.01)* ***A23L 33/185*** *(2016.01)*

(52) Cooperative Patent Classification (CPC):
**A23G 1/54; A23G 1/48; A23J 3/14; A23L 33/125; A23L 33/185;** A23P 20/10; A23P 30/10

(86) International application number:
**PCT/EP2022/079150**

(87) International publication number:
**WO 2022/269103 (29.12.2022 Gazette 2022/52)**

# (54) PROTEIN BAR

PROTEINRIEGEL

BARRE PROTÉINÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.10.2021 EP 21203975**

(43) Date of publication of application:
**28.08.2024 Bulletin 2024/35**

(73) Proprietor: **DSM IP Assets B.V.
6221 BE Maastricht (NL)**

(72) Inventors:
- **FRANSE, Maartje Maria
6100 AA ECHT (NL)**
- **JACOBS, Barbara
6100 AA ECHT (NL)**
- **SCHEFFELAAR, Max Hans
6100 AA ECHT (NL)**

(74) Representative: **dsm-firmenich IP
DSM-Firmenich AG
Wurmisweg 576
4303 Kaiseraugst (CH)**

(56) References cited:
**WO-A1-2020/226909 US-A1- 2020 060 310**

- **KEEFER H R M ET AL: "Role of sweeteners on temporality and bar hardening of protein bars", JOURNAL OF DAIRY SCIENCE, AMERICAN DAIRY SCIENCE ASSOCIATION, US, vol. 103, no. 7, 21 May 2020 (2020-05-21), pages 6032 - 6053, XP086181421, ISSN: 0022-0302, [retrieved on 20200521], DOI: 10.3168/JDS.2019-17995**
- **CHMIELEWSKA ANNA ET AL: "Canola/rapeseed protein - nutritional value, functionality and food application: a review", 10 September 2020 (2020-09-10), USA, pages 1 - 21, XP055783398, ISSN: 1040-8398, Retrieved from the Internet <URL:https://www.researchgate.net/profile/Justyna_Rosicka/publication/344221948_Canolarapeseed_protein_-_nutritional_value_functionality_and_food_application_a_review/links/5fa57f8f299bf10f7329289b/Canola-rapeseed-protein-nutritional-value-functionality-and-food-application-a-review.pdf> [retrieved on 20200910], DOI: 10.1080/10408398.2020.1809342**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **MERIT FUNCTIONAL FOODS: "You'll flip for this high-protein vegan pancake mix concept!", 1 August 2021 (2021-08-01), www.linkedin.com, pages 1 - 1, XP055880938, Retrieved from the Internet <URL:http://web.archive.org/web/20210819170523/https://www.linkedin.com/posts/merit-functional-foods_merit-functional-foods-we-help-unlock-better-activity-6833802039575789569-h6D_/> [retrieved on 20220119]**

## Description

### Field of the invention

This invention relates to a protein bar. Further, the present invention relates to a method for preparing a protein bar and to the use of rapeseed protein isolate.

### Background of the invention

Protein bars are increasingly popular as source of protein. For example, in the world of sport, where proteins are abundantly consumed, bars are a convenient source to supply high amounts of protein. A popular protein source for protein bars is whey protein. With the trend for vegan products there is a need in the art for vegan protein bars. However, the use of plant protein provides challenges for the sensory attributes flavour and texture/mouthfeel of the protein bar. With regard to the sensory attribute flavour, plant proteins can give an undesired protein flavour to the protein bar. With regard to the sensory attribute texture/mouthfeel, plant proteins can give the protein bar an undesired astringency, graininess, mouth drying and toothpacking.

To address these challenges, the amount of protein in protein bars is kept at a certain level, to avoid that the contribution of the plant proteins on the flavour and texture/mouthfeel is too much. For example, WO2020/223337 describes how protein bars are made using an amount of 18.3 wt. % rapeseed protein or dairy protein.

Keefer et al. 'Role of sweeteners on temporality and bar hardening of protein bars', Journal of Dairy Science, US vol. 103, no. 7, 21 May 2020, pages 6032-6053, discloses protein bars comprising a protein source, shortening, fiber and a sweetener, wherein the protein source is pea protein in an amount of 29 wt. %. Bars made with pea protein were associated with yellow pea or beany, pyrazine, fecal and cardboard flavours.

Chmielewska et al., 'Canola/rapeseed protein nutritional value, functionality and food application; a review', Critical Reviews in Food Science and Nutrition, 10, September 2020, pages 1-21 disclose that Supertein™ and Puratein™ can constitute up to 50% of high protein nutrition bars, and that Isolexx™ can be incorporated up to 30% in nutritional bars.

Therefore, there is a need in the art for vegan protein bars that have high amounts of protein, and at the same time have beneficial flavour and texture attributes.

### Description of the invention

The present invention relates to a protein bar comprising 20 to 70 wt. % of a binder, water, pea protein and rapeseed protein, wherein the sum of the pea protein and rapeseed protein is at least 20 wt. % of the protein bar, wherein the ratio of pea protein to rapeseed protein is within the range of 40:60 to 85:15.

Surprisingly, the present inventors found that a protein bar comprising both pea protein and rapeseed protein has beneficial flavour and texture attributes, and thus protein bars can be provided having high amounts of protein without compromising the flavour and texture. Further, the present protein bar is a vegan protein bar. Hence, the present protein bar does not comprise animal derived protein such as milk or dairy protein.

The term protein bar as used in the present context means a snack product for human consumption, usually having the shape of a bar, comprising proteins.

The term binder, as used in the present context, means the matrix that forms the protein bar and holds together the protein bar ingredients. The binder can be a single type product or a combination of products.

In a preferred embodiment, the present binder is a syrup, preferably a syrup chosen from the group consisting of maltitol syrup, tapioca syrup and brown rice syrup. Syrups provide the consistency that is needed to form a protein bar. Preferably the syrup is a maltitol syrup, as it provides in combination with pea and rapeseed protein a protein bar that is less toothpacking than conventional protein bars.

The amount of protein in the present bar can be tailored towards the wishes of the manufacturer. For example, sport bars usually have higher amounts of protein, whereas non sport protein bars have a somewhat lower amount of protein.

In a preferred embodiment, the sum of the pea protein and rapeseed protein is from 25 to 50 wt. % of the protein bar. For example, the sum of the pea protein and rapeseed protein is from 26 to 44, 27 to 40, 28 to 39, 29 to 38, 30 to 37, 31 to 36, 32 to 35, 33 to 34 wt. % of the protein bar.

In a preferred embodiment, the sum of the pea protein isolate and rapeseed protein isolate is from 25 to 50 wt. % of the protein bar. For example, the sum of the pea protein isolate and rapeseed protein isolate is from 26 to 44, 27 to 40, 28 to 39, 29 to 38, 30 to 37, 31 to 36, 32 to 35, 33 to 34 wt. % of the protein bar.

Protein bars can be manufactured in diverse forms. For example, protein bars can be coated or not coated. Alternatively, protein bars can be decorated, such as yogurt or chocolate like decorations. Preferably, the present bar further comprising a coating and/or decoration.

In a preferred embodiment, the present protein bar further comprises a chocolate coating. Preferably a dairy free chocolate coating. Preferably a sugar free chocolate coating. Chocolate can be any kind of chocolate, like pure, semi pure or white chocolate.

In a preferred embodiment, the present protein bar further comprises 1 to 10 wt. % of a vegetable oil. Preferably 1.5 to 5 or 2 to 4 wt. % of a vegetable oil.

Preferably, the present vegetable oil or fat is liquid at 5°C, or the vegetable oil is solid at 5°C, or combinations thereof. Hence, the vegetable oil can be a combination of oil that is liquid at 5°C with a vegetable oil that is solid at 5°C.

In an embodiment, the vegetable oil comprises a vegetable oil having a solid fat content of 0-90% (w/w) 5-80% (w/w), preferably 10-70% (w/w), or 20-50% (w/w) at 5°C. Preferably, the present vegetable oil comprises more than 90% (w/w) triglycerides.

In the context of the invention, suitable vegetable oils or fats are corn oil, olive oil, rapeseed oil or canola oil, soya bean oil, sunflower oil, camelina oil, groundnut oil, cotton seed oil, safflower oil, sesame oil, rice bran oil; all oils that are essentially liquid at room temperature. Further in the context of this invention, the vegetable oil may also contain oils that are solid or partially solid at room temperature, such as coconut oil, palm kernel oil, babassu oil, palm oil, shea butter, cocoa butter. Alternatively, fractions of the vegetable oils may be used, or mixtures of the vegetable oils mentioned before, either a mixture as such, or after chemical of enzymatic interesterification. Optionally, a part of the vegetable oil is a blend that is obtained by oil or fat that may be hardened by suitable methods known in the art. A preferred vegetable oil comprises coconut oil and sunflower oil.

In a preferred embodiment, the present protein bar comprises less than 20 ppm gluten, preferably less than 10 ppm gluten. Such a protein bar can be labelled as gluten free, which is advantageous in that more and more consumer desire clean label products.

Similarly, the present protein bar does preferably not comprise soy allergens and/or soy protein.

In a preferred embodiment, the ratio of pea protein to rapeseed protein is within the (weight) range of. Preferably, the present ratio of pea protein to rapeseed protein is 85:15, 84:16, 83:17, 82:18, 81:19, 80:20, 79:21, 78:22, or 79:23. Preferably, the present ratio of pea protein to rapeseed protein is within the range of 80:20 to 40:60.

In a preferred embodiment, the ratio of pea protein to rapeseed protein is within the range of 40:60 to 60:40, 45:55 to 55:45.

Preferably, the present ratio of pea protein to rapeseed protein is 61:39(w/w), 62:38(w/w), 63:37(w/w), 64:36(w/w), 65:35(w/w), 66:34(w/w); 67:33(w/w); or 75:25(w/w).

Preferably, the present ratio of pea protein to rapeseed protein is 71:29(w/w), 72:28(w/w), 73:27(w/w), 74:26(w/w) or 75:25 (w/w). Preferably is 80:20(w/w), 81:19(w/w), 82:18(w/w), 83:17(w/w), 84:16(w/w), or 85:15 (w/w).

In a preferred embodiment, the present ratio of pea protein to rapeseed protein is 75:25(w/w). Preferably, the present ratio of pea protein to rapeseed protein is 76:24(w/w), 77:23(w/w); 78:22 (w/w) or 79:21 (w/w); or 80:20: (w/w). Preferably, the present ratio of pea protein to rapeseed protein is within the range of 75:25 to 85:15, 76:24 to 84:16 (w/w), 77:23 to 83:17 (w/w); 78:22 to 82:18 (w/w) or 79:21 to 81:19 (w/w).

In a preferred embodiment, the present protein bar further comprises 0.1 to 5 wt. % of an emulsifier. Preferably wherein the amount of emulsifier is from 0.02-3% (w/w) of the protein bar. An emulsifier promotes formation and/or stability of emulsions. Suitable emulsifiers may be the ones known to the skilled person, for example phospholipids (e.g. lecithin and the like), fractionated lecithin, or (partially) hydrolyzed lecithin, or calcium, magnesium, potassium, or sodium salts of fatty acids, mono- and diglycerides (MDG), preferably saturated MDG, and derivatives thereof such as lactic acid esters ("Lactem") of MDG, acylated tartaric acid esters ("Datem") of MDG, sorbitan esters of monostearate (Tweens and Spans), sugar esters of fatty acids, polyglycerolesters of fatty acids and the like. Typically, combinations of emulsifiers can be used, such as a combination of MDG and lactic acid esters of MDG. Typically, between 0.1 and 1.5% emulsifier is used. Preferably, the amount of emulsifier is from 0.02-2% (w/w) of the protein bar, preferably the amount of emulsifier is from 0.1-1.5% (w/w) of the protein bar such as around 0.5, 0.6, 0.7 or 0.8% (w/w) of the protein bar. Preferably the emulsifier is lecithin, preferably vegan lecithin, such as sunflower lecithin.

In an embodiment the present protein bar may comprise a hydrocolloid. Hydrocolloids are a diverse group of long chain polymers characterized by their property of forming viscous dispersions and/or gels when dispersed in water. In the context of the invention, suitable hydrocolloids are galactomannans (guar gum, locust bean gum (LBG) and tara gum), gellan (including low or high-acyl gellan), xanthan, low- and high-methoxy pectins, alginates, carrageenans, gum Arabic, cellulose derivatives such as carboxymethyl cellulose, hydroxypropylmethyl cellulose, methyl cellulose, native and modified starches, citrus fibers and the like. Preferably, the amount of hydrocolloid is from 0.02-1% (w/w) of the protein bar. More preferably, the amount of hydrocolloid is from 0.1-1% (w/w) of the protein bar. More preferably, the present protein bar comprises gellan gum and pectin, more preferably high acyl gellan gum and low methoxy pectin.

In a preferred embodiment, the present protein bar further comprises 0.1 to 5 wt. % of a flavor. Preferably the flavor is chocolate and/or vanilla flavor. Preferably the amount of flavor is from 0.5 to 2 wt. %.

In a preferred embodiment, the present protein bar further comprises comprising 0.01 to 5 wt. % of a sweetener. More preferably the amount of sweetener is within the range of 0.1 to 3 wt. %, such as 1 to 2 wt. %. The sweetener can be a

low-calorie sweetener. Preferably, the sweetener is chosen from the group of aspartame, sucralose, sugar alcohols and steviol glycosides.

Preferably, the present protein bar comprises a dietary fiber. Preferably the dietary fiber is a plant-based fiber. Preferably a fiber selected from the group consisting of pea fiber, fava bean fiber, lupin fiber, oil seed fiber (such as sunflower seed fiber or cotton seed fiber), fruit fiber (such as apple fiber), cereal fiber (such as oat fiber, maize fiber, rice fiber), bamboo fiber, potato fiber, inulin, and combinations thereof. Preferably the present dietary fiber is inulin derived from chicory root, or an inulin type fraction such as inulin type fructans.

Preferably, the present protein bar further comprises a mineral. Preferably a mineral chosen from the group consisting of calcium phosphate, potassium phosphate, chromium chloride, copper gluconate, magnesium phosphate, manganese sulfate, potassium iodide, reduced iron, sodium molybdate, zinc sulfate, tricalcium phosphate, ferrous fumarate, magnesium oxide, potassium chloride, potassium citrate and zinc oxide.

In a preferred embodiment, the present protein bar further comprises vitamins. Preferably the vitamin is a vitamin composition comprising vitamin A, D, E, thiamin, riboflavin, niacin, pantothenic acid, pyridoxine, B12, ascorbic acid, calcium magnesium, potassium, biotin and/or folic acid. Alternatively, the vitamin is vitamin A, D, E and/or B12.

Preferably, the present protein bar comprises a taste modifier or masking agent. For example masking agents for masking protein like off flavours. Preferably, the amount of masking flavour is within 0.1 to 5 wt. % of the protein bar, such as from 1 to 3 wt. % of the protein bar.

The rapeseed used to obtain the rapeseed protein as applied in the instant invention is usually of the varieties *Brassica napus* or *Brassica juncea.* These varieties contain low levels of erucic acid and glucosinolates, and are the source of canola, a generic term for rapeseed oil comprising less than 2% erucic acid and less than 30 mmol/g glucosinolates. The predominant storage proteins found in rapeseed are cruciferins and napins. Cruciferins are globulins and are the major storage protein in the seed. A cruciferin is composed of 6 subunits and has a total molecular weight of approximately 300 kDa. Napins are albumins and are low molecular weight storage proteins with a molecular weight of approximately 14 kDa. Napins are more easily solubilized and are primarily proposed for use in applications where solubility is key. Preferably the present rapeseed protein is a rapeseed protein isolate.

In a preferred embodiment, the present rapeseed protein (isolate) comprises 40 to 65 wt. % cruciferins and 35 to 60 wt. % napins (of the rapeseed protein). Preferably, the present rapeseed protein comprises 40 to 55 wt. % cruciferins and 45 to 60 wt. % napins.

In a preferred embodiment, the present rapeseed protein (isolate) comprises 60 to 90 % cruciferins and 10 to 40 wt. % napins suc as 60 to 80 wt. % cruciferins and 20 to 40 wt. % napins. Preferably, the present rapeseed protein comprises 65 to 75 wt. % cruciferins and 25 to 35 wt. % napins. Preferably, the present rapeseed protein comprises 85 to 95 wt. % cruciferins and 5 to 15 wt. % napins.

In a preferred embodiment, the present rapeseed protein (isolate) comprises 0 to 10 wt. % cruciferins and 90 to 100 wt. % napins. Preferably, the present rapeseed protein comprises 1 to 5 wt. % cruciferins and 95 to 100 wt. % napins. Preferably, the present rapeseed protein comprises 1 to 20 wt. % cruciferins and 80 to 100 wt. % napins. An example of such a product is Puratein® HS from Merit Functional Foods.

Preferably, the amounts of cruciferins and napins calculated based on the total amount of protein in the present cake mix. Or alternatively, the amounts of cruciferins and napins are calcuated based on the sum of cruciferins and napins present in the cake mix. Preferably, the amounts of cruciderins and napins are determined by size exclusion chromatography (SEC). Preferably, the amounts of cruciderins and napins are determined by size exclusion chromatography (SEC) using the following test:

samples of protein isolate are dissolved in a 500 mM NaCl saline solution and analyzed by High Performance SEC using the same solution as the mobile phase, followed by detection using measuring UV absorbance at 280 nm, wherein the relative contribution of cruciferin and napin (wt. %) was calculated as the ratio of the peak area of each protein with respect to the sum of both peak areas.

Preferably, the present rapeseed protein (isolate) comprises 40 to 65 wt. % 12S and 35 to 60 wt. % 2S. Preferably, the present rapeseed protein comprises 40 to 55 wt. % 12S and 45 to 60 wt. % 2S. Preferably, the present rapeseed protein comprises 20 to 40 wt. % 12S and 45 to 65 wt. % 2S. An example of such a product is Puratein® C from Merit Functional Foods.

In a preferred embodiment, the present rapeseed protein (isolate) comprises 60 to 80 wt. % 12S and 20 to 40 wt. % 2S. Preferably, the present rapeseed protein comprises 65 to 75 wt. % 12S and 25 to 35 wt. % 2S. Preferably, the present rapeseed protein comprises 45 to 60 wt. % 12S and 20 to 40 wt. % 2S. An example of such a product is Puratein® G from Merit Functional Foods.

In a preferred embodiment, the present rapeseed protein (isolate) comprises 0 to 10 wt. % 12S and 90 to 100 wt. % 2S. Preferably, the present rapeseed protein comprises 1 to 5 wt. % 12S and 95 to 100 wt. % 2S. Preferably, the present rapeseed protein comprises 0 to 5 wt. % 12S and 80 to 90 wt. % 2S. An example of such a product is Puratein® HS from Merit Functional Foods.

Preferably, the amounts of 12S and 2S is determined by sedimentation velocity analytical ultracentrifugation (SV-

AUC) analysis. Preferably, the amounts of 12S and 2S is determined by sedimentation velocity analytical ultracentrifugation (SV-AUC) analysis using the following test:
samples of protein isolate are dissolved in a 3.0% (or 500 mM) NaCl saline solution and amounts determined using interference optics.

In a preferred embodiment, the present rapeseed protein (isolate) comprises a conductivity in a 2 wt.% aqueous solution of less than 9000 μS/cm over a pH range of 2 to 12. More preferably the conductivity of the native rapeseed protein isolate in a 2 wt. % aqueous solution is less than 4000 μS/cm over a pH range of 2.5 to 11.5. For comparison the conductivity of a 5 g/l NaCl aqueous solution is around 9400 μS/cm. Preferably conductivity is measured with a conductivity meter, for example Hach sensION+ EC71.

In a preferred embodiment, the present rapeseed protein (isolate) comprises a solubility of at least 88 % when measured over a pH range from 3 to 10 at a temperature of 23 +/-2 °C. Preferably a solubility of at least 90, 91, 92, 93, 94, 95, 96, 97, 98 or at least 99% over a pH range from 3 to 10 at a temperature of 23 +/-2 °C. This is also known as the soluble solids index (SSI).

Preferably, solubility is calculated by:

Protein solubility (%) = (concentration of protein in supernatant (in g/l) / concentration of protein in total dispersion (in g/l)) x 100.

Preferably, the solubility is measured using the following test:

- sufficient protein to supply 0.8 g of protein is weighed into a beaker;
- a small amount of demineralized water is added to the powder and the mixture is stirred until a smooth paste is formed;
- additional demineralized water is then added to make a total weight of 40 g (yielding a 2 % w/w protein dispersion);
- the dispersion is slowly stirred for at least 30 min using a magnetic stirrer;
- afterwards the pH is determined and adjusted to the desired level (2, 3, 4, etc.) with NaOH or HCl;
- the pH of the dispersion is measured and corrected periodically during 60 minutes stirring;
- after 60 minutes of stirring, an aliquot of the protein dispersion is reserved for protein concentration determination (Dumas analysis; Dumas N x 6.25), another portion of the sample is centrifuged at 20,000 G for 2 min;
- the supernatant and pellet are separated after centrifugation;
- the protein concentration of the supernatant is also determined by Dumas analysis (Dumas N x 6.25);
- and protein solubility is calculated by:

  Protein solubility (%) = (concentration of protein in supernatant (in g/l) / concentration of protein in total dispersion (in g/l)) x 100.

For use in human food consumption the removal of phytates, phenolics (or polyphenolics) and glucosinolates prevents unattractive flavour and coloration and prevents decreased nutritional value of the protein isolate. At the same time this removal enhances the protein content of the protein isolate.

In a preferred embodiment, the present rapeseed protein (isolate) has a phytate level less than 5 wt.%, preferably less than, 4, 3, 2, 1, 0.5, 0.4, 0.3, 0.2. 0.1 or less than 0.01 wt. %. Alternatively, the present rapeseed protein (isolate) has a phytate level of 0.01 to 4, 0.05 to 3, 0.1 to 1 wt.%. Preferably the phytate level is measured using method QD495, based on Ellis et al, Analytical Biochemistry Vol. 77:536-539 (1977).

In a preferred embodiment, the present rapeseed protein (isolate) has a phenolic content of less than 1 wt.% on dry matter expressed as sinapic acid equivalents. Preferably less than 0.9, 0.8, 0.7, 0.6, 0.5, 0.4, 0.3, 0.2, 0.1, 0.05 or less than 0.01 wt.% on dry matter expressed as sinapic acid equivalents.

In a preferred embodiment, the present rapeseed protein (isolate) comprises < 10 ppm gliadin. Preferably the rapeseed protein (isolate) comprises less than 5 ppm gliadin and most preferably no gliadin can be detected. Preferably, gliadin content is determined using sandwich ELISA from R-Biopharm (cat no R7001, lot 14434) used according to the manufacturer's instructions to determine the gliadin ppm in extracts.

Pea protein, obtained from yellow pea *Pisum sativum,* is also a mixture of various proteins (see for instance Lam et al. Food Rev. International 2018 34(2) p126-147), consisting of globulins (70-80%) and albumins (10-20%). The globulin fraction consists of several proteins: Legumin (11S, 300-400 kDa), vicilin (7S, 150-170 kDa) and convicilin (210 kDa as trimer), the water-soluble albumin fraction consists of proteins with molecular masses up to 80 kDa comprising enzymes protease- and amylase inhibitors and lectins. Furthermore, a small fraction consists of among others prolamins and glutenins. The method of extraction highly influences the composition of the protein concentrate or isolate, as well as its physico-chemical properties and its flavour. The general process for producing a pea protein isolate is known in the art and described for instance by Frederikson et al. (J. Agric. Food Chem. 2001, 49, p1208-1212 Production Process for High-

Quality Pea-Protein Isolate with Low Content of Oligosaccharides and Phytate). Several industrial methods to obtain isolates are described such as WO2020221978 (Gelling leguminous protein), US2020229462 (Pea protein composition having improved nutritional quality), EP3071045 B1 (Method for extracting pea proteins), US2020281224 (Product analogs or components of such analogs and processes for making same). Next to pea protein isolates and pea protein concentrates, usually obtained by a wet extraction process, also dry fractionation can be used to obtain a protein-enriched pea flour. Dry fractionation may occur by processes such as wind sifting or electrostatic separation. Preferably the pea protein is a pea protein isolate.

In a preferred embodiment, the rapeseed protein is a rapeseed protein isolate and/or wherein the pea protein is a pea protein isolate.

The term isolate means that on a dry basis, 85 wt. % of the total weight of the isolate is protein. This is calculated using the Dumas method according to AOAC Official Method 991.20 Nitrogen (Total) in Milk, using a conversion factor of 6.25 was used to determine the amount of protein (% (w/w)). Typically, the non-protein content of the protein isolate includes non-protein compounds such as, fibre and/or other carbohydrates, minerals, anti-nutritional substances. Preferably the present protein isolate has a protein content of at least 90 wt.% (calculated as Dumas N x 6.25) on a dry weight basis, preferably at least 91, 92, 93, 94, 95, 96, 97, 98, or at least 99 wt.% on a dry weight basis (calculated as Dumas N x 6.25).

In addition to the present rapeseed protein and pea protein, the present protein bar may comprise another plant-based protein, such as proteins from legumes and pulses such as, fava bean protein, chickpea protein, lupin protein, lentil protein, mung bean protein, peanut; or seed proteins such as cotton seed protein, sunflower seed protein, sesame seed protein, camelina; cereal or pseudo cereal protein, such as oat protein, rice protein, corn protein, sorghum protein, quinoa protein, buckwheat; leaf protein such as alfalfa protein, clover protein, duckweed protein, grass protein; protein from stem or root tuber protein such as potato protein, sweet potato protein, cassava protein, yam protein, taro protein; protein derived from nuts, such as almond, hazelnut, walnut, cashew; coconut protein, or proteins from algal, insect or microbial sources, or proteins produced via fermentation (i.e. precision fermentation) such as fermentative dairy milk protein or fermentative egg protein.

**In** an embodiment, the present protein bar may comprise seeds, nuts and/or cereals. Seeds are selected from sunflower, coconut, chia, flax, tiger nut, quinoa, sesame, hemp, pumpkin and combinations thereof. Nuts can be selected from almonds, cashews, pecans, macadamias, hazelnuts, pistachio, walnuts, and combinations thereof. Cereals are selected from wheat, rye, teff, rice, millet, spelt, barley, oat, sorghum and combinations thereof.

**In** an embodiment, the present protein bar may comprise a fruit preparation such as full fruits, pieces, juices, syrups, purees, extracts, powders and concentrates. Examples of fruits are monk fruit, cherry, passion, blackberry, blueberry, raspberry, pea, apple, mango, apricot, peach and strawberry.

Preferably, the present protein bar may comprise produce fragments. Exemplary produce fragments include fruit fragments or vegetable fragments. Illustrative fruit fragments include those formed from strawberries, watermelon, grapes, banana, peaches, mangos, pineapples, apples, cherries, oranges, grapefruits, mandarins, pomelos, clementines, blueberries, raspberries, pears, blackberries, plums, kiwis, melons, lemons, limes, tangerines, coconut, combinations thereof, or any suitable alternative. Illustrative vegetable fragments include those formed from carrots, broccoli, peppers, cucumbers, corn, spinach, cauliflower, combinations thereof, or any suitable alternative. In some embodiments, a fruit fragment is a micro dried fruit fragments. In some embodiments, the produce fragments comprise micro dried strawberry fragments.

Preferably, the percentage of produce fragments in the protein bar is at least about 5 percent, at least about 10 percent, or at least about 15 percent by weight of the protein bar. In some embodiments, the percentage of produce fragments in the protein bar is about 5 percent, about 10 percent, about 1 1 percent, about 12 percent, about 13 percent, about 14 percent, about 15 percent, about 16 percent, about 17 percent, about 18 percent, about 19 percent, about 20 percent, about 21 percent, about 22 percent, about 23 percent, about 24 percent, about 25 percent, about 30 percent, about 35 percent, or about 40 percent by weight of the protein bar. In some embodiments, the percentage of produce fragments in the protein bar is in a range of about 5 percent to about 40 percent, about 5 percent to about 30 percent, about 10 percent to about 30 percent, or about 10 percent to about 25 percent by weight of the protein bar.

In a preferred embodiment, the present protein bar has a reduced astringency compared to a similar protein bar comprising at least 20 wt. % pea or rapeseed protein.

The term 'Astringency' as used in the present context is a flavour attribute which can be explained by the degree in which an astringent feeling is present in the mouth after the product has been swallowed (the sensation can be mimicked with red wine, black coffee and the "skin" of a nut).

In a preferred embodiment, the present protein bar has a reduced protein flavour compared to a similar protein bar comprising at least 20 wt. % pea or rapeseed protein.

In a preferred embodiment, the present protein bar has a reduced graininess compared to a similar protein bar comprising at least 20 wt. % pea or rapeseed protein.

In a preferred embodiment, the present protein bar has a reduced mouth drying compared to a similar protein bar

comprising at least 20 wt. % pea or rapeseed protein.

In a preferred embodiment, the present protein bar has a reduced toothpacking compared to a similar protein bar comprising at least 20 wt. % pea or rapeseed protein.

In a preferred embodiment, the present protein bar has an improved hardening over time compared to a similar protein bar comprising at least 20 wt. % pea or rapeseed protein.

Preferably the present protein bar has a weight within the range of 30 to 100 gram, such as 35 to 75 gram, such as 40 to 65 gram, such as 45 to 55 gram.

A food bar in accordance with the present disclosure will have a particular water activity as defined as a measurement of bound water v. amount of water that is free to interact with surroundings. A lower water activity may provide antimicrobial properties and may increase shelf life of the food bar. Illustratively, if the water activity is below 0.6, microbial growth is minimized.

In some embodiments, the water activity of the protein bar is less than about 0.7 or less than about 0.6. In some embodiments, the water activity of the protein bar is about 0.4, about 0.42, about 0.44, about 0.46, about 0.48, about 0.5, about 0.51, about 0.52, about 0.53, about 0.54, about 0.55, about 0.56, about 0.57, about 0.58, about 0.59, about 0.6, about 0.62, about 0.64, about 0.66, about 0.68, about 0.7, about 0.8, about 1, about 1.2, about 1.4, about 1.6, about 1.8, or about 2. In some embodiments, the water activity of the protein bar is in a range of about 0.4 to about 2, about 0.4 to about 1.4, about 0.4 to about 1, about 0.4 to about 0.7, about 0.4 to about 0.6, about 0.46 to about 0.6, or about 0.46 to about 0.58.

According to another aspect, the present invention relates to a method for preparing a protein bar as defined herein before, comprising adding pea protein and rapeseed protein to water and a binder, and forming the protein bar in a mold. Optionally the present method further comprising a step of coating the protein bar. Further, the present method may heating a binder, followed by adding the pea protein and rapeseed protein, and blending towards a homogenous dough is obtained. The homogenous dough can be further processed in a mold to provide the protein bar.

According to another aspect, the present invention relates to the use pea protein and rapeseed protein for reducing astringency, protein flavour, graininess, mouth drying or toothpacking in a protein bar, wherein the ratio of pea protein to rapeseed protein is within the range of 40:60 to 85:15 and wherein the protein bar comprises at least 20 wt. % of pea and rapeseed protein. Preferably wherein the rapeseed protein isolate is as further specified above.

The invention is hereby illustrated with the following non-limiting examples.

## Example 1

### Production of protein bar

A protein bar is produced using the ingredients as listed in table 1 below.

Table 1

| Ingredient | Supplier | Wt. % |
|---|---|---|
| Maltitol syrup | Maltisweet M95, Ingredion | 25.00 |
| Rapeseed protein isolate | According to WO2018/007492 (>90 wt. % protein) | 19.40 |
| Pea protein isolate | Vegotein Z80, Axiom Foods | 16.30 |
| Dairy free chocolate coating | Cargill | 13.50 |
| Glycerin | KIC Chemicals | 7.50 |
| Cocoa powder | Montgomery 10/12, Barry Callebaut | 6.69 |
| Water | Tapwater | 6.00 |
| Coconut oil | RBD HYD 92, Cargill | 2.60 |
| Taste modifier | Magnifique Greenaway V2 powder, Wixon | 1.00 |
| Sunflower lecithin | IFC solutions | 0.85 |
| Cocoa flavor | WONF, Prova Inc. | 0.60 |
| Vanilla flavor | US0026A, Prova Inc. | 0.40 |
| Salt | | 0.10 |
| Monk fruit extract | Tate & Lyle | 0.03 |
| Stevia | Eversweet, DSM | 0.03 |

(continued)

| Ingredient | Supplier | Wt. % |
|---|---|---|
| **Total** | | **100** |

First, the wet ingredients were mixed in a Kenwood mixer and set the temperature at 80°C. Mixing continued at low speed (setting#1) until the mix was a homogenous syrup. Secondly, all dry ingredients were blended in a Hobart blender. The homogenous syrup was added to the dry ingredients in the Hobart blender and mixed for 1-2 minutes at low speed (setting #1) until a dough is formed. The dough is placed into forming molds and rolled to achieve a uniform slab. The slab is cutted into bars of 52 gram each. The bars were stored overnight in a refrigerator. The bars were brought to room temperature and the chocolate coating was melted in an enrober at 50°C. The bars were fully coated with chocolate and excess coating was removed. The bars where stored in a refrigerator for further use.

## Example 2

### Sensory assessment of protein bars

The following protein bars are assessed by a sensory panel.

Table 2

| Product | Protein source | Amount of protein |
|---|---|---|
| Maxim protein bar HERO | Milk and soy | 35 wt.% |
| Body & Fit Vegan Perfectoin Bar | Hydrolyzed wheat gluten, soy, pea, rice, pumpkin seed | 32 wt. % |
| Protein bar of example 1 | Pea and rapeseed | 33 wt. % |
| No Cow Protein Bar | Brown rice and pea | 33 wt. % |
| Orgain Protein Snack Bar | Brown rice and pea | 25 wt. % |
| ALOHA Organic Plant based protein bar | Brown rice and pumpkin | 25 wt. % |

A test panel of 5 panellists used Quantitative Descriptive Assessment (QDA), and evaluated all bars twice, resulting in n=10. The results of the tested attributes are shown in table 3 below.

For a specific attribute, values not sharing an uppercase letter are significantly different at the 95% confidence level (LSD, p<0.05). Rows without letters indicate no significant difference. Scale range = 0 to 15.

Table 3

| | Maxim Protein Bar Hero | Body&Fit Vegan Perfection Bar | Example 1 | No Cow Protein Bar | Orgain Chocolate Brownie | ALOHA Organic Plant Based Protein Bar | P-Value |
|---|---|---|---|---|---|---|---|
| **% protein** | **35** | **32** | **33** | **33** | **25** | **25** | |
| **FLAVOR:** | | | | | | | |
| Total Flavor | 5.4 A | 4.6 AB | 3.9 B | 4.7 AB | 5.1 A | 5.0 A | 0,0113 |
| Protein | 2.0 B | 2.1 B | 1.9 B | 2.7 A | 2.5 AB | 2.8 A | 0,0204 |
| Cocoa | 3.1 BC | 3.5 AB | 2.8 C | 1.8 D | 2.0 D | 4.0 A | <.0001 |
| Sweet | 5.8 A | 3.9 BC | 4.3 B | 3.4 C | 3.5 BC | 4.2 BC | <.0001 |
| **TEXTURE/MOUTH FEEL:** | | | | | | | |
| Hardness | 6.3 B | 8.3 A | 5.4 C | 5.7 C | 6.4 B | 6.4 B | <.0001 |
| Cohesiveness | 8.4 AB | 8.4 A | 8.2 AB | 6.9 C | 8.0 AB | 7.5 BC | 0,0088 |

(continued)

| TEXTURE/MOUTH FEEL: | | | | | | | |
|---|---|---|---|---|---|---|---|
| Chalky | 3.4 D | 4.5 CD | 4.1 CD | 8.3 A | 4.6 BC | 5.6 B | <.0001 |
| Astringency | 1.8 B | 2.1 AB | 1.9 B | 2.0 AB | 2.4 A | 2.1 AB | 0,0362 |
| Graininess | 4.7 C | 5.7 BC | 2.9 D | 7.5 A | 6.2 B | 6.0 B | <.0001 |
| Mouth Drying | 3.3 C | 4.6 B | 3.2 C | 6.5 A | 5.1 B | 5.3 B | <.0001 |
| Toothpacking | 3.9 B | 5.3 A | 2.2 C | 4.0 B | 3.1 BC | 3.5 B | <.0001 |
| **AFTERTASTE:** | | | | | | | |
| Total Aftertaste | 2.2 BC | 2.8 AB | 1.9 C | 2.8 AB | 2.9 A | 2.6 AB | 0,0131 |

With regard to flavour, the results show that the bar of example 1 is high in plant protein while the protein flavour is experienced as low, comparable to the protein flavour of the milk and soy containing bars of (non-vegan) Maxim protein bar HERO and Body&Fit Vegan Perfection Bar. The other bars are either lower in protein content and score higher on protein flavour.

With regard to texture / mouthfeel the results show that the vegan bar of example 1 is improved versus the other vegan bars, in that the attributes astringency, graininess, mouth drying and toothpacking are significantly lower than for the other bars.

Finally, the aftertaste of the bar of example 1 is significantly lower than for the other bars.

Example 3

Protein bars with different ratios of pea and rapeseed protein

Protein bars were made using the method of example 1 with the recipe of table 4 below as model recipe. The ratio of pea : rapeseed protein was varied from 100:0, to 75:25, to 50:50 and to 25:75.

Table 4

| Ingredient | Supplier | Wt. % |
|---|---|---|
| Maltitol syrup | Maltisweet M95, Ingredion | 25.8 |
| Rapeseed protein isolate and Pea protein isolate | Rapeseed protein according to WO2018/007492 (>90 wt. % protein) and pea protein Vegotein Z80, Axiom Foods | 36.8 |
| Dairy free chocolate coating | Cargill | 13.9 |
| Glycerin | KIC Chemicals | 7.7 |
| Cocoa powder | Montgomery 10/12, Barry Callebaut | 6.9 |
| Water | Tapwater | 6.2 |
| Coconut oil | RBD HYD 92, Cargill | 2.7 |
| **Total** | | **100** |

The bars were tested by a sensory panel of 4 testers who randomly and anonymized tasted the protein bars and ranked the bars in the right order from lowest score (score 1) to highest (score 4). The bars were ranked on the following taste attributes: tooth packing, astringency, graininess, mouth drying and protein off-flavour. The results are shown in table 5 below and are an average from 4 testers.

Table 5

| Ratio pea protein:rapeseed protein | 100:0 | 75:25 | 50:50 | 25:75 |
|---|---|---|---|---|
| Tooth packing | 1.5 | 2 | 2.5 | 4 |
| Astringency | 1.5 | 2 | 2.5 | 4 |

(continued)

| Ratio pea protein:rapeseed protein | 100:0 | 75:25 | 50:50 | 25:75 |
|---|---|---|---|---|
| Graininess | 4 | 3 | 2 | 1 |
| Mouth drying | 4 | 3 | 1.75 | 1.25 |
| Off-flavor | 3 | 2.75 | 1.75 | 2.5 |

The results show that addition of rapeseed protein reduces the graininess, mouth drying and off-flavour of a 100% pea protein bar. The astringency and tooth packing increases upon addition of rapeseed protein, however, at a slower pace than the reduction of graininess, mouth drying and off-flavour.

## Claims

1. A protein bar comprising 20 to 70 wt. % of a binder, water, pea protein and rapeseed protein, wherein the sum of the pea protein and rapeseed protein is at least 20 wt. % of the protein bar, wherein the ratio of pea protein to rapeseed protein is within the range of 40:60 to 85:15.

2. A protein bar according to claim 1, wherein the sum of the pea protein and rapeseed protein is from 25 to 50 wt. % of the protein bar.

3. A protein bar according to any of the preceding claims, further comprising a coating or decoration, preferably a chocolate coating.

4. A protein bar according to any of the preceding claims, further comprising 1 to 10 wt. % of a vegetable oil.

5. A protein bar according to any of the preceding claims, comprising less than 20 ppm gluten.

6. A protein bar according to any of the preceding claims, wherein the binder is a syrup, preferably a syrup chosen from the group consisting of maltitol syrup, tapioca syrup and brown rice syrup.

7. A protein bar according to any of the preceding claims, further comprising 0.1 to 5 wt. % of an emulsifier and/or further comprising 0.1 to 5 wt. % of a flavor.

8. A protein bar according to any of the preceding claims, further comprising 0.01 to 5 wt. % of a sweetener.

9. A protein bar according to any of the preceding claims, wherein the rapeseed protein comprises 40 to 65 wt. % cruciferins and 35 to 60 wt. % napins.

10. A protein bar according to any of the preceding claims, wherein the rapeseed protein comprises 60 to 80 wt. % cruciferins and 20 to 40 wt. % napins.

11. A protein bar according to any of the preceding claims, wherein the rapeseed protein comprises 0 to 10 wt. % cruciferins and 90 to 100 wt. % napins.

12. A protein bar according to any of the preceding claims, wherein the rapeseed protein is a rapeseed protein isolate and/or wherein the pea protein is a pea protein isolate.

13. Method for preparing a protein bar as defined in any of the preceding claims, comprising adding pea protein and rapeseed protein to water and a binder, and forming the protein bar in a mold.

14. Use of pea protein and rapeseed protein for reducing astringency, protein flavour, graininess, mouth drying or toothpacking in a protein bar, wherein the ratio of pea protein to rapeseed protein is within the range of 40:60 to 85:15 and wherein the protein bar comprises at least 20 wt. % of pea and rapeseed protein.

## Patentansprüche

1. Proteinriegel, umfassend 20 bis 70 Gew.-% eines Bindemittels, Wasser, Erbsenprotein und Rapsprotein, wobei die Summe aus Erbsenprotein und Rapsprotein mindestens 20 Gew.-% beträgt, wobei das Verhältnis von Erbsenprotein zu Rapsprotein im Bereich von 40:60 bis 85:15 liegt.

2. Proteinriegel nach Anspruch 1, wobei die Summe von Erbsenprotein und Rapsprotein 25 bis 50 Gew.-% des Proteinriegels beträgt.

3. Proteinriegel nach einem der vorhergehenden Ansprüche, ferner umfassend einen Überzug oder eine Verzierung, vorzugsweise einen Schokoladenüberzug.

4. Proteinriegel nach einem der vorhergehenden Ansprüche, ferner umfassend 1 bis 10 Gew.-% eines Pflanzenöls.

5. Proteinriegel nach einem der vorhergehenden Ansprüche, umfassend weniger als 20 ppm Gluten.

6. Proteinriegel nach einem der vorhergehenden Ansprüche, wobei es sich bei dem Bindemittel um einen Sirup, vorzugsweise einen Sirup, der aus der Gruppe bestehend aus Maltitsirup, Tapiokasirup und Braunreissirup ausgewählt ist, handelt.

7. Proteinriegel nach einem der vorhergehenden Ansprüche, ferner umfassend 0,1 bis 5 Gew.-% eines Emulgators und/oder ferner umfassend 0,1 bis 5 Gew.-% eines Aromastoffs.

8. Proteinriegel nach einem der vorhergehenden Ansprüche, ferner umfassend 0,01 bis 5 Gew.-% eines Süßstoffs.

9. Proteinriegel nach einem der vorhergehenden Ansprüche, wobei das Rapsprotein 40 bis 65 Gew.-% Cruciferine und 35 bis 60 Gew.-% Napine umfasst.

10. Proteinriegel nach einem der vorhergehenden Ansprüche, wobei das Rapsprotein 60 bis 80 Gew.-% Cruciferine und 20 bis 40 Gew.-% Napine umfasst.

11. Proteinriegel nach einem der vorhergehenden Ansprüche, wobei das Rapsprotein 0 bis 10 Gew.-% Cruciferine und 90 bis 100 Gew.-% Napine umfasst.

12. Proteinriegel nach einem der vorhergehenden Ansprüche, wobei es sich bei dem Rapsprotein um ein Rapsproteinisolat handelt und/oder wobei es sich bei dem Erbsenprotein um ein Erbsenproteinisolat handelt.

13. Verfahren zur Herstellung eines Proteinriegels gemäß einem der vorhergehenden Ansprüche, umfassend Zugeben von Erbsenprotein und Rapsprotein zu Wasser und einem Bindemittel und Bilden des Proteinriegels in einer Form.

14. Verwendung von Erbsenprotein und Rapsprotein in einem Proteinriegel zur Verringerung von Adstringenz, Proteingeschmack, Körnigkeit, Mundtrockenheit oder Zahnbelag, wobei das Verhältnis von Erbsenprotein zu Rapsprotein im Bereich von 40:60 bis 85:15 liegt und wobei der Proteinriegel mindestens 20 Gew.- % Erbsen- und Rapsprotein umfasst.

## Revendications

1. Barre de protéines comprenant de 20 à 70 % en poids d'un liant, de l'eau, des protéines de pois et des protéines de colza, dans laquelle la somme des protéines de pois et des protéines de colza est d'au moins 20 % en poids de la barre de protéines, dans laquelle le rapport des protéines de pois sur les protéines de colza est dans la plage de 40:60 à 85:15.

2. Barre de protéines selon la revendication 1, dans laquelle la somme des protéines de pois et des protéines de colza est de 25 à 50 % en poids de la barre de protéines.

3. Barre de protéines selon l'une quelconque des revendications précédentes, comprenant en outre un enrobage ou une décoration, de préférence un enrobage de chocolat.

**4.** Barre de protéines selon l'une quelconque des revendications précédentes, comprenant en outre 1 à 10 % en poids d'une huile végétale.

**5.** Barre de protéines selon l'une quelconque des revendications précédentes, comprenant moins de 20 ppm de gluten.

**6.** Barre de protéines selon l'une quelconque des revendications précédentes, dans laquelle le liant est un sirop, de préférence un sirop choisi dans le groupe constitué par le sirop de maltitol, le sirop de tapioca et le sirop de riz brun.

**7.** Barre de protéines selon l'une quelconque des revendications précédentes, comprenant en outre 0,1 à 5 % en poids d'un émulsifiant et/ou comprenant en outre 0,1 à 5 % en poids d'un arôme.

**8.** Barre de protéines selon l'une quelconque des revendications précédentes, comprenant en outre 0,01 à 5 % en poids d'un édulcorant.

**9.** Barre de protéines selon l'une quelconque des revendications précédentes, dans laquelle les protéines de colza comprennent 40 à 65 % en poids de crucifėrines et 35 à 60 % en poids de napines.

**10.** Barre de protéines selon l'une quelconque des revendications précédentes, dans laquelle les protéines de colza comprennent 60 à 80 % en poids de crucifėrines et 20 à 40 % en poids de napines.

**11.** Barre de protéines selon l'une quelconque des revendications précédentes, dans laquelle les protéines de colza comprennent 0 à 10 % en poids de crucifėrines et 90 à 100 % en poids de napines.

**12.** Barre de protéines selon l'une quelconque des revendications précédentes, dans laquelle les protéines de colza sont un isolat de protéines de colza et/ou dans laquelle les protéines de pois sont un isolat de protéines de pois.

**13.** Procédé de préparation d'une barre de protéines telle que définie dans l'une quelconque des revendications précédentes, comprenant l'ajout de protéines de pois et de protéines de colza à de l'eau et un liant, et la mise en forme de la barre de protéines dans un moule.

**14.** Utilisation de protéines de pois et de protéines de colza pour réduire l'astringence, l'arôme protéine, la granularité, le séchage en bouche ou la charge sur les dents dans une barre de protéines, dans laquelle le rapport des protéines de pois sur les protéines de colza est dans la plage de 40:60 à 85:15 et dans laquelle la barre de protéines comprend au moins 20 % en poids de protéines de pois et de colza.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020223337 A
- WO 2020221978 A
- US 2020229462 A
- EP 3071045 B1
- US 2020281224 A
- WO 2018007492 A


### Non-patent literature cited in the description


- **KEEFER et al.** Role of sweeteners on temporality and bar hardening of protein bars. *Journal of Dairy Science*, 21 May 2020, vol. 103 (7), 6032-6053
- **CHMIELEWSKA et al.** Canola/rapeseed protein nutritional value, functionality and food application; a review. *Critical Reviews in Food Science and Nutrition*, 10 September 2020, 1-21
- **ELLIS et al.** *Analytical Biochemistry*, 1977, vol. 77, 536-539
- **LAM et al.** *Food Rev. International*, 2018, vol. 34 (2), 126-147
- **FREDERIKSON et al.** *J. Agric. Food Chem.*, 2001, vol. 49, 1208-1212